(19) Europäisches Patentamt
European Patent Office
Office européen des brevets

(11) EP 3 467 431 A1

(12) EUROPEAN PATENT APPLICATION

(43) Date of publication:
10.04.2019  Bulletin 2019/15

(51) Int Cl.:
G01B 11/25 (2006.01)    G06T 7/521 (2017.01)
G05B 19/418 (2006.01)

(21) Application number: 17425095.1

(22) Date of filing: 03.10.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Inno.Tec Srl
80121 Napoli (IT)

(72) Inventors:
• Del Prete, Antonio
73100 Lecce (LE) (IT)
• Capalbo, Vincenzo
73100 Lecce (LE) (IT)
• Izzo, Domenico
80122 Napoli (NA) (IT)

(74) Representative: Conversano, Gabriele
Laforgia, Bruni & Partners srl
Via Michele Garruba, 3
70122 Bari (IT)

(54) **DEVICE AND METHOD FOR IN-LINE QUALITY CONTROL OF COMPONENTS OBTAINED BY FLAT SHEETS FORMING**

(57)     Device for controlling quality of pieces obtained by flat sheets forming, comprising: a laser light source (10) configured to light up at least a portion of the piece (2) produced by the production process to be controlled: a first (11) and a second camera (12), configured so that the portion of said piece (2), lighted up by said source (10), is framed from different viewing angles; movement means (13) with respect to the light source (10) and the workpiece (2); electronic means (14) configured so that said movement means (13) and said laser light source (10) are controlled, and to acquire the images captured by said cameras (11, 12), and to implement a process statistical control method comprising the following steps of:

i. complete scanning of said workpiece (2);

ii. analysis of data acquired during scanning and reconstruction of the workpice geometry;

iii. comparison between the geometry of said piece (2) acquired by scanning and the piece project geometry;

iv. determination, on the basis of the comparison carried out at point 3, of the component quality and its acceptability,

v. repetition of steps i. to iv. for all pieces (2) object of working and statistical analysis of the series of data acquired for detecting possible drifts of said production process.

Fig. 4

**Description**

The present invention relates to a device and a method for process quality control in the production of components by flat sheets forming, to be applied in manufacturing and in particular in automotive field.

More in particular the present invention relates to the application of some statistical process control techniques (SPC) in the particular field of flat sheets forming that, by means of the analysis of a series of parameters, allows to carry out a predictive analysis of the process control conditions.

STATE OF THE ART

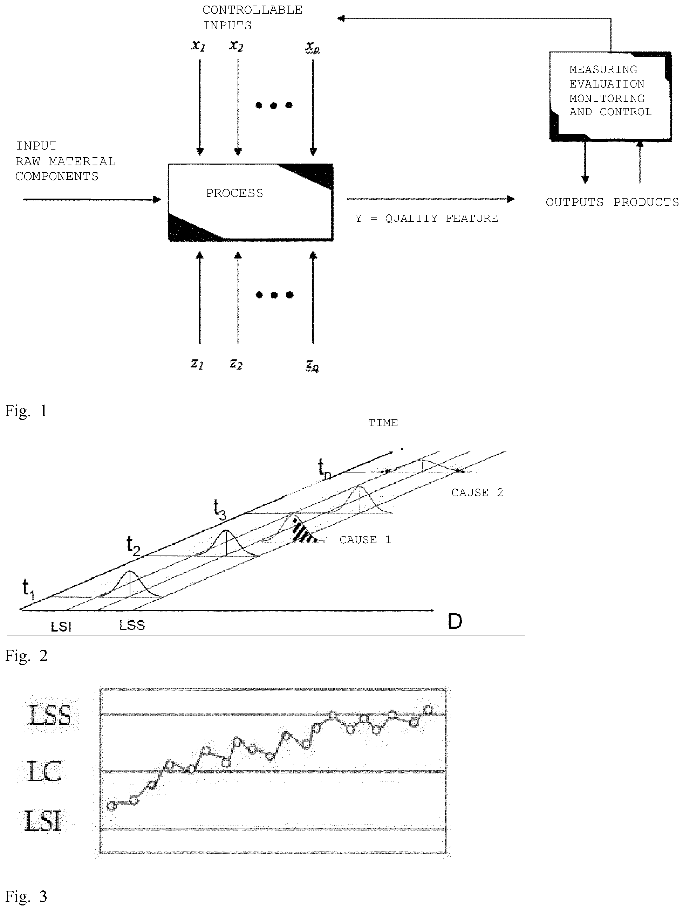

Any production process can be seen as a system comprising a plurality of inputs and outputs, as shown in figure 1. Some inputs ($x_1$, $x_2$,..., $x_p$) are controllable factors of the production process, as for example temperatures, pressures, forces, movements and other variables. Other inputs ($z_1$, $z_2$, ...$z_p$) are instead out of control or difficult to be controlled. Among these ones there are for example environmental factors or specific properties of the raw material purchased by the seller. Some of these inputs are in fact also difficult to be measured and evaluated.

The process turns all these inputs into a finished product. Each finished product is provided with a series of qualitative features which, as a whole, define the product compliance with the production standards or not. All these qualities are summed up by the variable y, which measures the process quality.

Once the variables, which influence the production, are individuated, it is important to find out a way: i) to measure them which methods allowing to control all the produced pieces and ii) to determine a statistical model which links the values of these variables to the final product quality, so that it is possible to use efficiently the production monitoring and supervising techniques.

In fact it is often difficult (and expensive, anyway) to inspect or test the quality of a product, and so it is preferable to have a qualitatively acceptable product yet in the production step. A process allowing to have qualitatively acceptable products yet in production step is a stable production process.

But each process (and so the quality of products the same produces) is always subject to a certain intrinsic or natural variability, due to the summed effect of many little, inevitable constant or casual factors. A process whose variability is caused only by casual factors is said under control.

In addition to casual factors there exist other variability sources of a process (specific factors) which are particularly important, since: i) they influence the products resulting quality and ii) they are only occasionally present in the production process (and so, eliminable if individuated). This variability is generally caused by three main factor kinds: not well working machineries, errors made by operators or defective raw materials. The variability caused by these factors is very much clearer than the one caused by casual factors and generally leads to a not acceptable process performance. A process working in presence of specific factors is said out of control.

Generally the production processes work in control situations, thus producing acceptable quality pieces for long time periods. Anyway there can occur such specific, only apparently casual, factors leading to the production of great quantities of pieces not complying with the qualitative standards. Clearly the quality of defective pieces produced is as higher as more time elapses between the occurrence of specific factors and the moment in which such factors are identified and eliminated.

For example by observing **figure 1** it is to be noted that when the process is under control, the majority of values of the quantity under control (significant for the acceptability of the piece or not) is among the higher and lower specific limits (respectively indicated by LSI and LSS); instead, when the process is out of control, the measure of this quantity is out of the acceptability limits for a great number of pieces; there can intervene causes which displace the process average (cause 1) or causes which increase its variance (cause 2). Generally the process passes from an under control to an out of control condition after a drift condition, i.e. a gradual and always progressive deviation of the quality features from their objective value is found, as it is shown in figure 3.

The primary objective of the application of the statistical techniques for process control is to individuate specific factors occurrence as fast as possible: the more faster the causes individuation is, the sooner the correction measures can be started in order that the production of many not acceptable pieces is avoided.

TECHNICAL PROBLEM

With reference to the industrial field of production of components formed by metal sheets the modern forming processes are characterized by very high production rates so, also with common numerical control machines for carrying out dimensional measuring cycles, it results impossible to test all the pieces in a production batch and so to always guarantee high qualitative standards. Currently the only feasible control on the whole pieces can be carried out by man, but it is limited to a visual inspection which allows to individuate only possible catastrophic anomalies of the system, indicating them as the various causes which lead to obtain absolutely not acceptable components since free of the minimum requirements provided in the project step (for example components free of intended holes). Minor defects, such for example, individual out of tolerance measures cannot be detected by a simple visual inspection.

AIM OF THE INVENTION

Therefore, aim of the present invention is to provide a device and a method for in-line quality control of products realized by flat sheet forming, for filing data acquired during the process control and for following exploitation of such data inside statistical control instruments of the process quality object of the study.

Brief description of the invention

The invention reaches its prefixed aims since it is a device for controlling quality of pieces obtained by flat sheets forming, comprising:

-    a laser light source (10) configured to light up at least a portion of the piece (2) produced by the production process to be controlled:
-    a first (11) and a second camera (12), configured so that the portion of said piece (2), lighted up by said source (10), is framed from different viewing angles;
-    movement means (13) with respect to the light source (10) and the workpiece (2),
-    electronic means (14) configured so that said movement means (13) and said laser light source (10) are controlled, and to acquire the images captured by said cameras (11, 12),

said electronic means being configured also so that they have access to data relating to the specific production process, characterized in that
said electronic means are configured also to implement a process statistical control method comprising the following steps of:

   i. complete scanning of said workpiece (2) by means of its own relative movement with respect to said laser light source (10) and acquisition of geometrical data relating to the piece, in form of clouds of points by optical acquisition modules;
   ii. analysis of data acquired during scanning and reconstruction of the acquired workpice geometry;
   iii. comparison between the geometry of said piece (2) acquired by scanning and the piece project geometry;
   iv. determination, on the basis of the comparison carried out at point 3, of the component quality and its acceptability,
   v. repetition of steps i. to iv. for all pieces (2) object of working and statistical analysis of the series of data acquired for detecting possible drifts of said production process.

Detailed description of the invention

The device according to the invention comprises an equipment which allows to acquire data useful for in-line quality control of components obtained by flat sheets forming; the acquired data are analyzed and processed by means of the method according to the invention, which can be implemented inside a software downloaded on suitable processing means. The method is able to process data relative to quality parameters of component produced to provide elements useful for quality statistical control of the process object of analysis.
Among the advantages provided by the method according to the invention, used as an alternative to the auto-control carried out manually on machine, there is the objectivation and automation of process monitoring, in real time with respect to its execution. All of this allows:

-    to reduce waste;
-    to minimize plant stop times;
-    to minimize production times;
-    to program maintenance according to trends of control factors;
-    to acquire a more advanced knowledge about process know-how, obtained by rationalizing the information acquired by means of process monitoring in a data base useful for the same statistical control.

DETAILED DESCRIPTION OF THE INVENTION

The invention provides a method to carry out in-line quality control of products obtained by flat sheets forming. It is in fact a process control integrated system, able to monitor the correct functioning of the systems involved in a working cycle by means of a device for detecting the pieces dimensions, and an analysis method of the data acquired by the device.

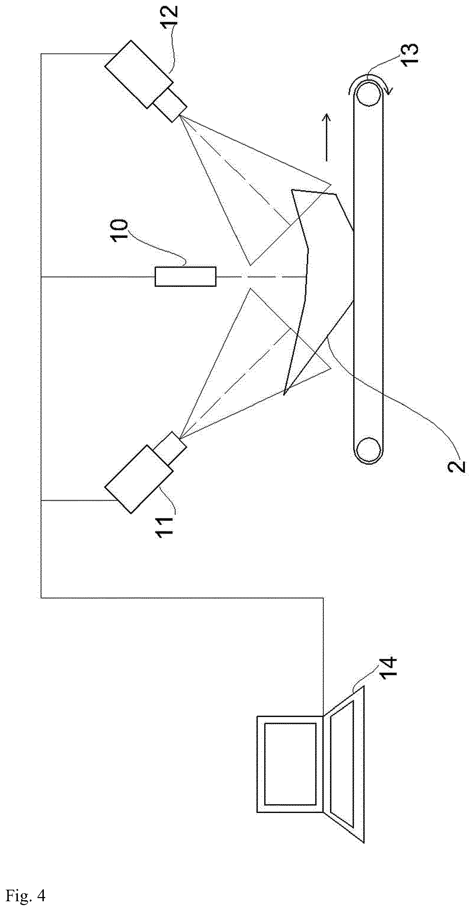

In figure 4 it is shown schematically the composition of the device according to the present invention. The device (1) comprises:

- a laser light source (10) configured to light up at least a portion of the piece (2) produced by the production process to be controlled. Preferably the laser light source is in form of a laser sheet;
- a first (11) and a second camera (12), configured so that the portion of said piece (2), lighted up by said source (10), is framed from different viewing angles.

During the production process the laser light source (10) and the workpiece (2) are in relative motion, so that the laser light lights up progressively the whole development of the workpiece (2). Preferably, the piece (2) is positioned on an advancement system (13). According to another embodiment it is the two cameras (11, 12) and the laser (10) that move integrally to each other, so to scan the whole workpiece development with the laser light.

The device comprises also control electronic means (14) of the advancement system (13) and laser light source (10) as well as for the acquisition of the data acquired by said cameras (11, 12). Laser (10) and cameras (11, 12) as a whole are configured to carry out a complete scanning of the workpiece. Said electronic means are also configured so that they have access to data relating to the specific production process (project geometry of the piece to be realized, accepted tolerances).

The process statistical control method by means of the data acquired with the described device comprises the following steps:

i. complete scanning of the workpiece (2) by means of its own relative movement with respect to said laser light source (10) and acquisition of geometrical data relating to the piece, in form of clouds of points by optical acquisition modules;

ii. analysis of data acquired during scanning and reconstruction of the acquired workpiece geometry, by applying in particular a suitable defeaturing algorithm, in the following described in detail;

iii. comparison between the geometry of acquired "form" and the piece project geometry, preferably contained in a 3D CAD model and containing nominal geometrical values of the component of interest.

iv. determination, on the basis of the comparison carried out at point 3, of the component quality and production of a detected quality control report.

Steps i. to iv. are carried out for each piece (2) object of the detection;

v. composition of the information acquired about all the sampled products, contained in reports of point iv., and realization of control cards for process stability control and for detecting possible drifts of the same;

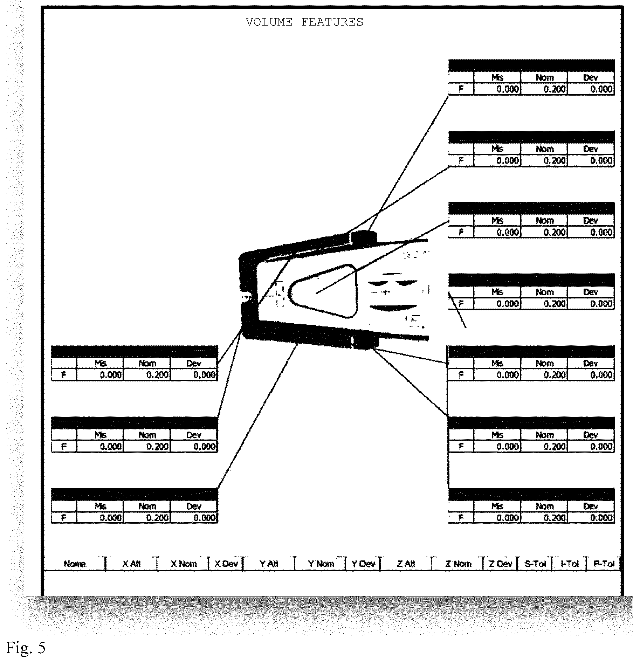

In figure 5 it is shown an example of a report obtained at point iv. of the present method; as it can be noticed for each piece (2) there are measured a plurality of geometrical quantities (21, 22, 23) and their value is compared with the value of the same quantity in the project CAD model of the piece.

In figure 6 it is shown an example of trend analysis detected over time, for a series of process quantities useful to define the quality of the worked piece.

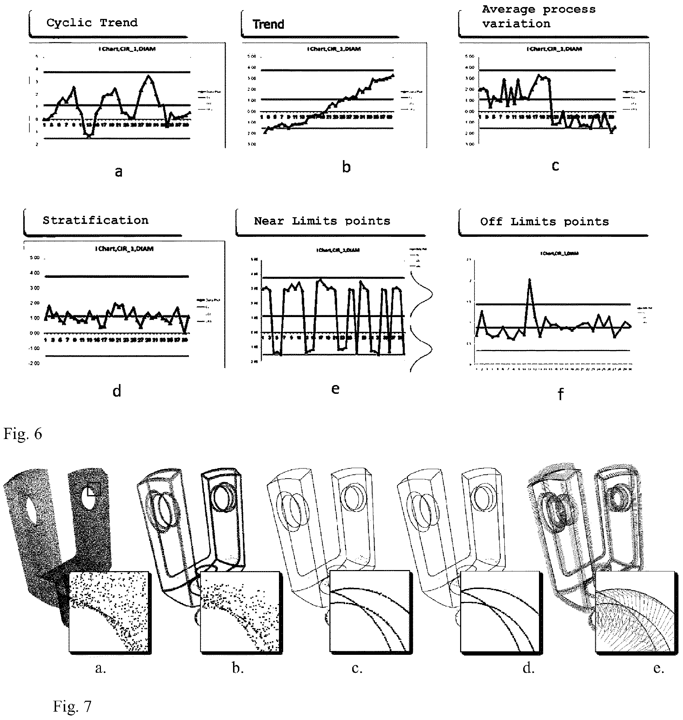

In particular, in figure 6 there are shown various kinds of trends which can be found: a cyclic trend (a) where a quantity takes cyclically values above and under the nominal value, but inside the acceptability limits; a trend (b) where a quantity increases (or decreases) progressively with the process advancing, and this leads inevitably to reach not acceptable values; a variation of the average of the process (c) where after an event to be identified there is observed a shift in the average around which the sampled points are arranged; a stratification (d) where the average is kept constant over time and the variance is of modest entity; presence of points near limits (3) where almost all points are in the acceptability range but near acceptability limits; presence of points off limits (f) where there are sporadically pieces with great defects.

By the general description of the method according to the invention it is immediately clear that in order to carry out efficiently the comparison of point iii, it is needed that:

a) the acquisition of geometry and its reconstruction, of points i. and ii, are carried out with speeds compatible with the process execution and with sufficient qualities to allow a significant comparison with the piece project geometry;

b) the series of data obtained for a plurality of pieces are analyzed by means of statistical analysis techniques in order to detect and identify immediately the arising of drift condition which could lead, in absence of interventions, to the realization of defective pieces.

In order to improve the acquisition quality of points i. and ii. of the method a method has been developed, described in the following, which allows to recognize free edges of a physical component and so to define a CAD model of the geometry of the workpiece.

The device, object of the present invention, comprises, as yet partially described, a scanner with structured light. It is a scanner, particularly adapted to scan object of contained dimensions, which project on the object whose geometry is intended to be detected, a light ray generated by a laser and which with a sensor, generally a CCD, detect the light reflected by the object. So, the scanner software calculates by a simple triangulation the list of depth values which are finally converted, knowing the relative position of the cameras and laser light source, in tridimensional coordinates expressed in the reference system of the scanner.

The description of an object provided by this scanner family is called range map; as previously said it is a list of depth values for a set of points of the object visible from a particular position (the projection centre of the same scanner) starting from which it is possible to obtain its spatial coordinates for each point. Actually, each range map is something more than a simple cloud of points: first of all the presence of a point in a range map implies that the point is directly visible by the sensor, excluding the presence of other occluding surfaces, and allows also to determine the side of the object on which the point lies; by organizing range maps organized as bi-dimensional arrays, an evaluation of the normal at each point can be obtained simply by suitable vectorial products.

Ultimately, from the point of view of the next steps of the acquisition pipeline, the scanner can be considered a black-box able to generate a cloud of points, for each one of which it is defined a normal, and which approximately lie on the surface of the scanned object.

It is to be considered that each range map obtained starting from each following scanning before the relative movement between piece and laser source describes only a portion of the object surface, and moreover, this description is expressed in the reference system of the scanner at the moment of the acquisition.

Since the final objective is the construction of a model which can be consulted from arbitrary points of view, it is clear the need to be able to describe the whole surface of the object: so, in the acquisition step is fundamentally important to guarantee that the range maps cover the whole surface of the object, or, at least those portions of surface of interest.

After the acquisition step there follows the recording (or alignment) step, where the range maps are brought in a common reference system. To record a range map means to calculate a rigid transformation which leads the points of such range map to be aligned with the surface portions that this range map shares with other range maps.

The recording step ends when all the range maps are expressed in a common reference system: the object is implicitly described by the cloud of points made up of the set of aligned range maps; if there is no effective description of the surface, *it is not yet possible to speak about a real tridimensional model;* it is the *integration* step (also called *fusion* step) to build a triangulated surface by exploiting the information contained in the starting dataset. In this step it is determined the surface which makes up a first version of the tridimensional model of the scanned object.

In order to obtain a valid tridimensional model, there are often needed other post-processing steps, during which the model is improved or adapted to specific needs of the application for which it was created; common post-processing operations comprise for example the simplification of the obtained model, which could be needlessly too detailed, and the correction of imperfections of the reconstructed surface. Typical correction operations are for example closing little holes, filtration of surfaces affected by excessive noise, or also elimination of portions of surface not considered of interest as for example the supports used for supporting an object during scanning process.

The objective of the fusion step is the reconstruction of only one continuous triangular and topologically correct surface starting from the information available in range maps. These last ones, which at the end of the previous alignment step are expressed in only one reference system, make up the input starting from which the fusion algorithms generate the tridimensional model of the scanned object.

The description of the acquisition process, described in the previous paragraph, is ended now with the analysis of the fusion step. Later in the chapter there are analyzed the most important fusion algorithms, providing for each one a general description of the method adopted to reconstruct a valid tridimensional model starting from the group of range maps.

Common to all the algorithms described in the following is the fact that they use more or less directly the points of the dataset as corners of the reconstructed model, and that they interpolate its surface through a suitable triangularization. These algorithms are implemented in the module which realizes the fusion of the range maps in the measuring system object of the development.

In particular an essential step of the reconstruction of the object geometry is represented by the identification of the object edges.

In this context an edge can be seen as the place of the points on which it is observed a discontinuity of the local normal on the surface representing the model. The identification of the edges simplifies a better comprehension of the model and as a consequence filtration and reconstruction operations.

The edges can be calculated through the research of the variations of the discrete surfaces normals constructed in the immediate neighborhood of each sampled point, for example polygonal faces. The simplest research method consists in implementing a threshold value test which identifies the potential edges of the features where the normals differ by a higher value than the one of tolerance, among close samples.

In each case the implementation of these identification techniques is anything but direct, since in many cases the information about the normals and the connectivity are not present inside the dataset and the reconstruction of these information is not simple to be implemented. A second problem to be solved is the presence of noise in the sampled models. The identification of linear features in presence of noise is complex since the gradients of normals to surfaces in the areas with edge features are very similar to the ones calculated in areas affected by noise.

The reconstruction algorithm implemented in the method according to the present invention defines a set of curves which are aligned along the edges of a cloud of points. The method is based on the framework of the RMLS surfaces (Robust Moving Least Squares), schematically shown in figure 7.

First of all it is selected a certain number of points potentially belonging to the edge features which are distinguished by the RMLS operator so that they are as close as possible to the searched features.

The problem of the RMLS algorithm is the impossibility to reconstruct regular ("smooth") features. The projection method produces in fact ragged edges which cannot be used for following reconstruction operations of smoother curves. Therefore, the algorithm used applies smoothing methods on feature points projected according to RMLS, by using a technique based on the analysis of the main components (PCA). Finally, connection techniques are applied of the extracted poly-lines which fill in the voids typically generated in low resolution samplings.

The advantage of using this method is that as starting data it uses only sets of sampled points absolutely not organized and possibly affected by noise and does not need other information as local normals which have to be known *a priori.* The algorithm for edge features extraction is described in figure 7.

The set of sampled points is defined as

$$P = \{(x, y, z)\} \subset \mathbb{R}^3$$

Given *P, S* is defined as the MLS surface (Moving Least Squares) defined by the projection operator $\Psi$ applied to an arbitrary point $p \in \mathbb{R}^3$ such that the point is projected on surface *S*, having $\Psi(p) \in S.$

Clearly, each point of the surface is projected on itself, i.e. the surface is defined as the set

$$S = \{p | p = \Psi(p)\}.$$

There are many possibilities to select the projection operator $\Psi$. It is typical to implement the projection of a point $p \in \mathbb{R}^3$ by finding a plane *H* which approaches the local neighbourhood of points close to *p* in set *P*.

In particular the plane *H* is defined by a point $q \in \mathbb{R}^3$ and a normal *n*, and defined so that the weighted sum of the distances of points *P from H* is minimum:

$$(n, q) = min_{(n,q)} \sum_{p \in P} (n, p - q)^2 \theta(\|p - q\|) \qquad (1)$$

Where $\theta$ is a weight function which decreases exponentially, i.e. $\theta(s) = e^{-s^2/h^2}$, and which assigns greater weights to points close to q. The parameter h defines the spatial shift of $\theta$.

Once *H* is known, it is needed to define a Cartesian local reference system with origin in *q* and two coordinated vectors orthogonal to *n.* So, to calculate the projected point $\Psi(x)$ at q on surface *S,* it is needed to fit a bi-varied polynomial *g* of prefixed degree. The polynomial is defined by the following problem of minimum:

$$min_g \sum_{p \in P} \|p - p_g\|^2 \theta(\|p - q\|) \qquad (2)$$

Where $P_g$ indicates the projection of point *p* on polynomial *g* in normal direction *n*.

The MLS projection consists in the solution to the minimum of equations (1) and (2), which comprises the assignment of weights to points belonging to the local neighbourhood of a considered point. The weights provide the smoothing effect which corrects the noise and outlier possibly present in the set P, but at the same time it eliminates the edge features.

The RMLS variant has been developed to solve this problem by considering the neighbourhoods of close points calculated iteratively through a statistical analysis of the corresponding points distribution. In particular, it is used a regression method of the median square, which minimizes the median of residuals absolute values between sampled points and fitted points. This research methodology increases the neighbourhoods of neighbours to MLS to find regular sub-regions, flat or outlier-free, for MLS projection. So this approach is able to determine the noise by disgregating outlier during the fitting step of surface and so to define edge features. Moreover, it reduces the smoothing effect of MLS method, thus improving the algorithm stability.

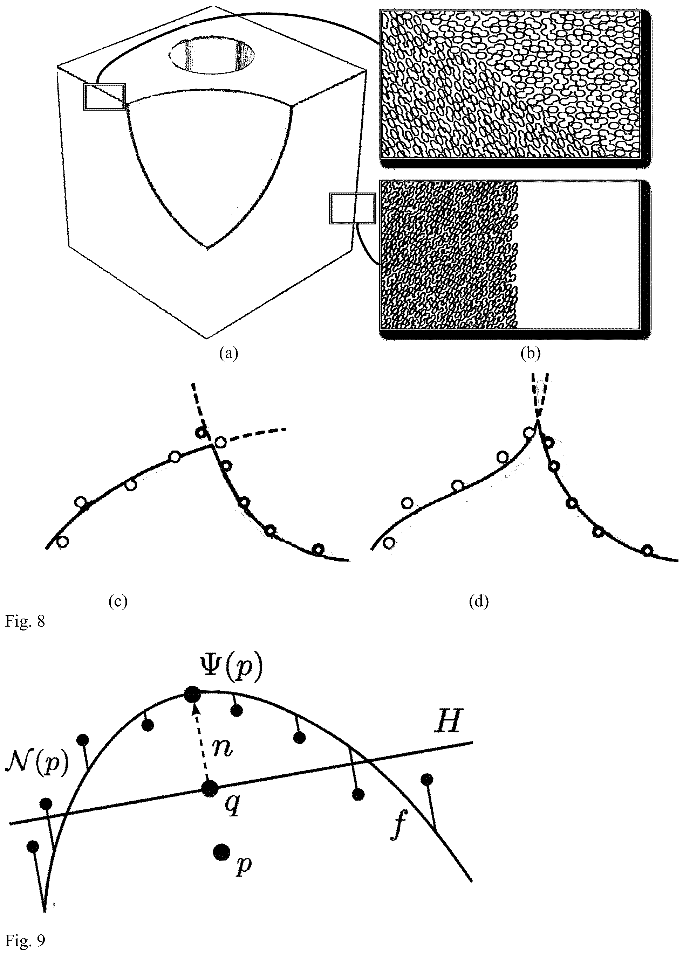

The problem is that the research of regular sub-regions is calculated independently for each point and this can induce situations in which points close in space do not increase the neighbourhood of neighbours at the same way, producing ragged outliers. In figures 8 (a) and (b) there are shown two different sub-regions which lead to ragged edges, created by the RMLS projections. In (c) and (d) there are observed two different sub-regions for a given point set which lead to different configurations of the resulting feature.

To solve this problem it is applied a smoothing method to the points projected according to the RMLS algorithm. The objective of the method is to extract regular and complete curves which approach satisfactorily the edge features by means of five steps:

1. extraction, from P, of points potentially close to edge features;
2. adoption of RMLS method to fit multiple surfaces of neighbourhoods of these points and projection of each point to the intersection between the closest surfaces;
3. smoothing projected points by using the method of close points neighbourhoods growth with the covariance analysis;
4. creation of a starting set of growth lines of the poly-lines which approach the projected and filtrated points as in previous point;
5. analysis of final points of the poly-lines for completing possible gaps and for connection of corner points.

To identify the potential edge area given a point $p \in P$ it is considered the neighbourhood of neighbours to $p$ $N(p) \sqsubseteq P$ which is used for the polynomial fit of the MLS projection. By considering the polynomial $f$ on the reference plane $H$ defined by point $q$ and normal $n$, it can be evaluated the maximum residual of the polynomial r in the neighbourhood of $p$, as:

$$r(p) = max_{x \in N(p)}\|x - x_f\|$$

Where $x_f$ corresponds to the projection of $x$ on $f$ in the direction of the normal $n$, as shown in figure 9.

For edge feature, $r$ increases sensibly because many points sampled on the edge move away from the fitting polynomial.

From this observation it is deduced that a way to embody the points as potentially belonging to an edge surface is to put $r(p) > \tau$, where with $\tau$ it is indicated a threshold defines empirically by the user.

Finally, the output of this step is the set of points candidate to belong to edge feature defined as:

$$\mathcal{F} = \{p \in P \,|\, r(p) > \tau\}$$

2. Projection of points on edges

To project points $p \in \mathcal{F}$ it is used the RMLS methodology. The output of the method is the definition of a certain number of surfaces fitting the points belonging to the neighbourhood of neighbours of $p$. The number of surfaces indicates the kind of feature in the region.

If the method RMLS gives only one surface, this implies that no edges are individuated, and that the exceeding of residuals threshold for $p$ is due to the outlier presence. If there are obtained two surfaces, there is an edge feature. Therefore, it is used the Newton method, as in [12], to project $p$ on the intersection of the two surfaces closest to $p$, thus producing an edge point.

If the RMLS method gives back three or more surfaces, there are then more convergent edge features and it is possible to identify a corner point c and an edge point e.

At this point the output of the projection method is a cloud of points $F(p)$ which has been decomposed in edge points and corner points:

$$F(p) = E(p) \cup C(p)$$

The RMLS projection produces multiple corner points relative to each region formed by three or more intersecting surfaces, and this, as yet said, leads to ragged edge features. So the objective is to group together the close corner points so to have only one representing the corner of the edge feature.

For each corner point $c_j \in C(p)$ which was the projection of a point $p_i \in F(p)$,, the corresponding projection on two close surfaces is considered

$$e_i \in E(p).$$

Now it is assigned a weight $w_i$ to point $c_i$ which is inversely proportional to the distance between $c_i$ and $e_i$

$$w_i = \frac{1}{\|c_i - e_i\|}$$

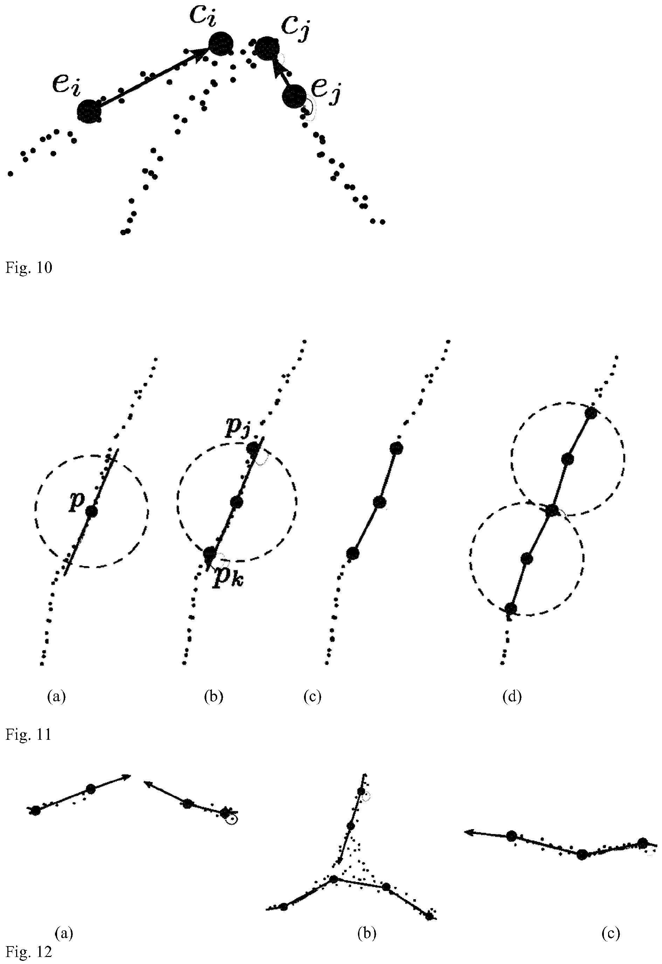

Figure 10 shows two close corner points $c_i$ and $c_j$ with different weights. The corner points $C_k(p) \sqsubset C(p)$ are then grouped together considering the neighbourhoods close to the radius $\varepsilon$ and selecting $\hat{c} \in C_k(p)$ which is the most similar to the weighted average of corner points of the set $C_k(p)$. All the other elements of $C_k(p)$ are considered edge points and pass from $C(p)$ to $E(p)$.

Since the points in $F(p)$ are generally affected by noise, it has been implemented a smoothing filtration method based on the covariance analysis of the points belonging to the neighbourhood of neighbours of a corner point.

Given $p \subset F$, it is considered the set of feature points $k$ (edge or corner) in a neighbourhood $\delta$ of $p$ defined by:

$$N(p) = \{p_i \subset F(p) | \|p_i - p\| \le \delta\}, i = 1, ..., k$$

The covariance matrix 3X3 is then calculated:

$$C = (p_1 - \bar{p}, ..., p_k - \bar{p}) \cdot (p_1 - \bar{p}, ..., p_k - \bar{p})^T$$

Where $\bar{p}$ is the average. The system is then solved to the auto-vectors $Cx_i = \lambda_i x_i$, $i \subset [0,1,2]$ and it is assumed that it is $\lambda_0 \ge \lambda_1 \ge \lambda_2$ without loosing generality. It results that the auto-vector $x_0$ corresponding to the greater auto-value is aligned with the edge line of the neighbourhood $N(p)$. The smoothing effect is obtained by projecting the edge points $p$ on the line defined by $\bar{p}$ and by the auto-vector $x_0$, obtaining p'.

It is observed that the efficacy of this filter is conditioned by the amplitude of the neighbourhood of neighbours of $p$ given by the parameter $\delta$. It is possible to use an adaptative growth of the neighbourhood as proposed in [13]. The method is based on the statistical analysis of the points distribution on a plane.

In particular, given a point $p$, the algorithm fits a local plane of points $p_i$ in the neighbourhood of neighbours N(p) and projects them on the plane defined by the two auto-vectors, which correspond to the greater auto-values. The resulting set of points lying on the plane, is interpreted in distribution terms of two random variables, X and Y, which can be analysed by using statistical methods. The cross-correlation coefficient of X and Y is defined by:

$$\rho(X, Y) = \frac{cov(X, Y)}{\sigma(X)\sigma(Y)}$$

With obvious meaning of the symbols. High absolute values of $\rho$ indicate that the relation between X and Y is linear, and i.e. that the points in $N(p)$ are distributed along a linear edge.

Given $p$, the adaptative growth algorithm of the neighbourhood of the neighbours, increases the neighbourhood $N(p)$ by adding iteratively points close to $p$ from $F(p)$ until the value of $\rho$ in not sufficiently high. In practice it is found that for $|\rho| \ge 0.7$ satisfying results are obtained.

Moreover, it is observed that the growth algorithm of the neighbourhood of neighbours does not work for the corner points, since the neighbourhood would tend to take points belonging to different edge features.

Finally, given a set of projected edge points $F(p)$, the output of the smoothing filter is a set of points defined as $F(s)$ which can be yet decomposed in edge points $E(s)$ and corner points $C(s)$.

At this point of the method, the points $F(s)$ do not have any piece of topological information yet. The aim of this step is to approach these points with a set of poly-lines. It is up to the user to choose the size of poly-lines by means of the definition of the maximum length of segments $s_{max}$ (max size). It was implemented a reconstruction algorithm of the poly-lines described in the following.

The polyline is initialized on a seed point p, where PCA is calculated (analysis of main components) for the points in neighbourhood $N(p)$ belonging to $F(s)$ with radius $s_{max}$. All the points $p_i$ belonging to $N(p)$ are projected on the line defined by p and the auto-vector corresponding to the maximum auto-value of $N(p)$; the projections being $p'_i$. The two points $p_i, p_k \in N(p)$ with the corresponding most distant projections from $p$ in the two directions are considered the two extremes of two new edge segments, figure 10(a) and (b). The method is repeated until the edge points end.

The method is not yet complete, since it is observed the presence of holes in those areas where the sampling is not sufficiently compact. In these regions there is a great number of not connected poly-lines which represent free edges.

The edge completing is implemented through a directional research. As shown in figure 12, it is considered the tangent vector of a point of edge end, evaluated by a fitting polynomial of third degree, on the last four points before the point of edge end.

For each point p of edge end other edge points are searched which are inside a cone defined by the tangent vector in p and with a determined angular opening defined by the user. The algorithm searches the corners inside the volume of the research cone, i.e. in a distance equal to $\alpha s_{max}$, with parameter $\alpha$ defined by the user.

## Claims

1.   Device for controlling quality of pieces obtained by flat sheets forming, comprising:

   - a laser light source (10) configured to light up at least a portion of the piece (2) produced by the production process to be controlled:
   - a first (11) and a second camera (12), configured so that the portion of said piece (2), lighted up by said source (10), is framed from different viewing angles;
   - movement means (13) with respect to the light source (10) and the workpiece (2),
   - electronic means (14) configured so that said movement means (13) and said laser light source (10) are controlled, and to acquire the images captured by said cameras (11, 12),

   said electronic means being configured also so that they have access to data relating to the specific production process,
   **characterized in that**
   said electronic means are configured also to implement a process statistical control method comprising the following steps of:

   i. complete scanning of said workpiece (2) by means of its own relative movement with respect to said laser light source (10) and acquisition of geometrical data relating to the piece, in form of clouds of points by optical acquisition modules;
   ii. analysis of data acquired during scanning and reconstruction of the acquired workpice geometry;
   iii. comparison between the geometry of said piece (2) acquired by scanning and the piece project geometry;
   iv. determination, on the basis of the comparison carried out at point 3, of the component quality and its acceptability,
   v. repetition of steps i. to iv. for all pieces (2) object of working and statistical analysis of the series of data acquired for detecting possible drifts of said production process.

2.   Device for controlling quality of pieces obtained by flat sheets forming according to claim 1, **characterized in that** data relating to the specific production process comprise information about the project geometry of the piece to be realized and the accepted tolerances.

3.   Device for controlling quality of pieces obtained by flat sheets forming according to claim 1 or 2, **characterized in that** said reconstruction of the workpiece acquired geometry comprises a defeaturing method for recognizing the component edges.

Fig. 1

Fig. 2

Fig. 3

Fig. 4

Fig. 5

**Cyclic Trend**

a

**Trend**

b

**Average process variation**

c

**Stratification**

d

**Near Limits points**

e

**Off Limits points**

f

Fig. 6

a.  b.  c.  d.  e.

Fig. 7

(a)

(b)

(c)

(d)

Fig. 8

Fig. 9

Fig. 10

(a)          (b)          (c)          (d)

Fig. 11

(a)          (b)          (c)

Fig. 12

Europäisches
Patentamt

European
Patent Office

Office européen
des brevets

## EUROPEAN SEARCH REPORT

Application Number

EP 17 42 5095

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/245616 A1 (DE LA BALLINA HELIOS [FR] ET AL) 1 October 2009 (2009-10-01) * paragraphs [0001], [0018], [0022], [0044], [0048], [0051]; figures 3,4 * | 1-3 | INV. G01B11/25 G06T7/521 G05B19/418 |
| X | US 2009/284593 A1 (DUBOIS MARC [US] ET AL) 19 November 2009 (2009-11-19) * paragraphs [0002], [0004], [0009], [0010], [0017] - [0020], [0028], [0029] * | 1-3 | |
| A | US 2008/192987 A1 (HELGASON THORGEIR [IS] ET AL) 14 August 2008 (2008-08-14) * the whole document * | 1-3 | |
| A | SHACHAR FLEISHMAN ET AL: "Robust moving least-squares fitting with sharp features", ACM TRANSACTIONS ON GRAPHICS (TOG), ACM, US, vol. 24, no. 3, 1 July 2005 (2005-07-01), pages 544-552, XP058365629, ISSN: 0730-0301, DOI: 10.1145/1073204.1073227 * the whole document * | 1-3 | TECHNICAL FIELDS SEARCHED (IPC) G01B G06T G05B |
| A | MATTHEW BERGER ET AL: "A Survey of Surface Reconstruction from Point Clouds : A Survey of Surface Reconstruction from Point Clouds", COMPUTER GRAPHICS FORUM, vol. 36, no. 1, 1 January 2017 (2017-01-01), pages 301-329, XP055449379, GB ISSN: 0167-7055, DOI: 10.1111/cgf.12802 * paragraph [4.3.1] * | 1-3 | |

The present search report has been drawn up for all claims

| Place of search | Date of completion of the search | Examiner |
|---|---|---|
| Munich | 12 February 2018 | Biedermann, Benjamin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                     

& : member of the same patent family, corresponding document

EPO FORM 1503 03.82 (P04C01)

## EP 3 467 431 A1

### ANNEX TO THE EUROPEAN SEARCH REPORT
### ON EUROPEAN PATENT APPLICATION NO.

EP 17 42 5095

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2018

| Patent document cited in search report | Publication date | Patent family member(s) | Publication date |
|---|---|---|---|
| US 2009245616 A1 | 01-10-2009 | CA 2659544 A1 | 26-09-2009 |
| | | EP 2105699 A1 | 30-09-2009 |
| | | ES 2626132 T3 | 24-07-2017 |
| | | FR 2929481 A1 | 02-10-2009 |
| | | US 2009245616 A1 | 01-10-2009 |
| US 2009284593 A1 | 19-11-2009 | AU 2009246265 A1 | 19-11-2009 |
| | | BR PI0912760 A2 | 17-05-2016 |
| | | CA 2724495 A1 | 19-11-2009 |
| | | CN 102084214 A | 01-06-2011 |
| | | EP 2288867 A1 | 02-03-2011 |
| | | IL 209274 A | 31-01-2017 |
| | | JP 5911904 B2 | 27-04-2016 |
| | | JP 2011521231 A | 21-07-2011 |
| | | JP 2014149301 A | 21-08-2014 |
| | | KR 20110031914 A | 29-03-2011 |
| | | TW 200951399 A | 16-12-2009 |
| | | US 2009284593 A1 | 19-11-2009 |
| | | WO 2009140461 A1 | 19-11-2009 |
| US 2008192987 A1 | 14-08-2008 | BR PI0514958 A | 01-07-2008 |
| | | CA 2579553 A1 | 16-03-2006 |
| | | CN 101040184 A | 19-09-2007 |
| | | EA 200700576 A1 | 26-10-2007 |
| | | EP 1789783 A1 | 30-05-2007 |
| | | JP 2008512672 A | 24-04-2008 |
| | | US 2008192987 A1 | 14-08-2008 |
| | | WO 2006027802 A1 | 16-03-2006 |